# EUROPEAN PATENT SPECIFICATION

(11) **EP 1 664 904 B1**
(45) Date of publication and mention of the grant of the patent: **07.01.2009**
(21) Application number: 04780649.2
(22) Date of filing: 10.08.2004
(51) Int. Cl.: G02C 9/00, G02C 7/08

(54) **MULTI-FACETED DETACHABLE MAGNETIC HINGE SYSTEM**
ABLÖSBARES MAGNETISCHES SCHWENKSYSTEM MIT MEHREREN FACETTEN
SYSTEME D'ARTICULATION MAGNETIQUE DETACHABLE COMPORTANT DES FACETTES MULTIPLES

(30) Priority: 09.09.2003 US 659227; 29.04.2004 US 836748
(43) Date of publication of application: 07.06.2006
(73) Proprietor: Kidouchim, Armand, Woodland Hills, CA 91367 (US)
(72) Inventor: Kidouchim, Armand, Woodland Hills, CA 91367 (US)
(74) Representative: Gerbaulet, Hannes
(86) International application number: PCT/US2004/025846
(87) International publication number: WO 2005/026823

(56) References cited:
- EP-A- 1 184 711
- WO-A-03/083557
- US-A- 4 152 051
- US-A- 4 534 627
- US-A1- 2002 140 897
- US-B1- 6 488 372

## Description

The present invention generally relates to a magnetic hinge system according to the preamble of claim 1 (= EP 1 184 711 A1), More particularly, the present invention relates to eyeglass devices, in particular to a magnetic hinge system which is particularly adapted to mount auxiliary eyeglasses or other eyewear, such as sunglass lenses, onto primary eyeglasses.

People often wear eyeglasses to correct their vision, be it near-sighted or far-sighted. The eyeglasses have a main frame with lenses fitted thereto.

Protective-lens eyeglasses are also available of generally the same construction.

There are instances, such as when in the sun, when an auxiliary eyewear, such as sunglasses, is desirable. There exist clip-on sun shades which are clipped to the vim or frame of the primary eyeglasses. However, most such sun shades are typically not able to be pivoted upwardly and out of view, such as when entering a building or the like from outdoors. Instead, the sun shades must be completely removed and stored in a pocket or the like of the eyeglass wearer.

Advancements in the field, as disclosed in prior art document EP 184 711 A1 and US 2002/0140897 A1, have led to the use of magnetic connecting members which are used to removably attach the sun shade or auxiliary lenses to the primary eyeglasses. However, the magnetic connections are typically not pivotally arranged.

To enable the user to pivotally "flip-up" the sun shades away form the eyeglass lenses a hinche member of the primary eyeglasses is connected by means of a frictional pressure connection to a hinge member of the sun shade or auxiliary lenses. Due to the interference between the magnetic connecting members and the pivotable pressure connecting members leverage forces are transmitted to the magnetic connecting members if the sun shades or auxiliary lenses are pivoted.

Yet other prior art auxiliary eyewear require specially manufactured eyeglasses for a stable connection. Alternatively, the auxiliary eye shades must be semi-permanently attached to the eyeglasses, such as using screws or the like. Of course, this does not enable the eyeglass wearer to conveniently remove the sun shades or auxiliary lenses.

In addition to the shortcomings described above, prior art auxiliary eyewear in general has the shortcoming that they are not adapted to be connected to any piece of eyewear. That is, the prior art auxiliary eyewear does not have universal connection means. Instead, they rely upon clips or attachments to the eyeglass to the primary eyeglasses which are usually very specific in nature. If not completely specific, the auxiliary eyewear still suffers a drawback of connecting to the primary eyewear in such a manner so as to limit it to only several styles of eyewear. This is due to the differences between the "nose bridge"portion of the frames and the size of the frames of the primary eyewear which varies dramatically between different styles.

In addition to removably and rotatably associating auxiliary eyewear with primary eyewear, there are other instances where a detachable connection between objects is desirable. In particular, there are instances where both a detachable and rotatable connection is preferred or even necessary.

Accordingly, there is a continuing need for a robust and userfriendly hinge system which detachably connects two objects and permits the objects to be at least partially rotated with respect to one another. There is also a continuing need for auxiliary lenses or eye shades which can be easily detached and connected to a pair of pre-existing eyeglasses. Such auxiliary eyewear should be capable of being detatchably connected to virtually any primary eyewear so as to be universal in nature. Preferably, such auxiliary lenses should be capable of being pivoted out of alignment with the lenses of the regular eyeglasses. The present invention fulfills these needs and provides other related advantages.

### SUMMARY OF THE INVENTION

The present invention resides in a magnetic hinge system for detachably and rotatably coupling first and second objects wherein the first object comprises a primary eyewear and the second object comprises an auxiliary eyewear detachably and rotatably connected to the primary eyewear. The system generally comprises a first hinge member associated with the first object and defining a hinge axis, the first hinge member having at least six generally planar outwardly-facing facets disposed about the hinge axis.

A second hinge member is associated with the second object and has a plurality of generally planar inwardly-facing facets configured to overlie less than all of the outwardly-facing facets of the first hinge member. Preferably, the second hinge member includes at least half as many facets as the first hinge member so as to overlie approximately 180° of the exterior surface of the first hinge member. In a particularly preferred embodiment, the first hinge member comprises a hexagon, and the second hinge member includes three facets overlying three outwardly-facing facets of the hexagon at any given time.

A magnetic field is associated with at least some of the facets to couple the second hinge member to the first hinge member and permit selective segmented rotation of the second hinge member relative to the first hinge member about the hinge axis. In one embodiment, the first hinge member is magnetic. At least a plurality of the facets of the first hinge member may have magnets embedded therein for magnetic coupling with the facets of the second hinge member. In another embodiment, the second hinge member is magnetic. At least a plurality of the facets of the second hinge member may have magnets embedded therein for magnetic coupling with the facets of the first hinge member. Alternatively, at least a plurality of the facets of both the first and second hinge members have magnets embedded therein such that the magnets of the first and second hinge members couple with one another as the facets thereof are placed into contact with one another. In a particularly preferred embodiment, the facets of the second hinge member have magnets associated with them and magnetically attract the metal facets of the first hinge.

The magnetic hinge system of the present invention is particularly adapted for use in a universal eyewear attachment system. In this embodiment, the first object comprises a cross-bar having saddles configured to be frictionally attached to a primary eyewear. Typically, gripping material is disposed on an inner surface of the saddles for frictionally engaging a frame of the primary eyewear. The second object comprises an auxiliary eyewear, such as sun shades, a magnifying lens, etc. The coupling of the first and second hinge members enable the auxiliary eyewear to be detachably connected to the primary eyewear and rotated into and out of the field of view of the primary eyewear lens.

In yet another embodiment, the cross-bar includes an extension which supports a plurality of first hinges spaced apart from one another. A plurality of eyewear can be pivotally mounted to the primary eyewear by mounting the respective second hinge of each auxiliary eyewear onto one of the first hinges on the extension.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

The accompanying drawings illustrate the invention. In such drawings:
FIGURE 1 is a front perspective view of an auxiliary lens disposed over lenses of regular eyeglasses,
FIGURE 2 is a front perspective view similar to FIG. 1, illustrating the auxiliary eyewear pivoted upwardly and away from the lenses of the regular eyeglasses;
FIGURE 3 is a front perspective view illustrating a docking head attached to the frame of the regular eyeglasses
FIGURE 4 is a partially exploded perspective view of the primary eyeglasses, docking head, and a clip pivotally attached to an auxiliary eyewear which is connectable to the docking head;
FIGURE 5 is a cross-sectional view taken generally along line 5-5 of Fig. 4, illustrating a preferred configuration of a saddle of the docking head used to removably attach it to the primary eyeglass frame;
FIGURE 6 is a cross-sectional view illustrating a tongue of the clip insertable into a slot of the docking head;
FIGURE 7 is a cross-sectional view taken generally along line 7-7 of Fig. 1, illustrating the auxiliary eyewear attached to the docking head and in an in-use position;
FIGURE 8 is a cross-section view taken generally along line 8-8 of Fig. 2, illustrating the auxiliary eyewear being pivoted upwardly and away from the lenses of the primary eyewear;
FIGURE 9 is a partially exploded and rear perspective view of a primary eyewear having a docking head with swing arms to lock the docking head thereon;
FIGURE 10 is a partially exploded perspective view of yet another attachment mechanism used to removably connect auxiliary eyewear and primary eyewear;
FIGURE 11 is a front perspective view illustrating the auxiliary eyewear attached to the primary eyewear and moved into a non-use position;
FIGURE 12 is a front perspective view illustrating the auxiliary eyewear pivoted downwardly into an in-use position;
FIGURE 13 is a rear perspective view of an auxiliary eyewear having a clip with a swing-arm;
FIGURE 14 is a front view of a primary eyewear with a docking head being inserted thereon;
FIGURE 15 is a front view similar to Fig. 14, illustrating the docking head expanding over a nose bridge portion of the frame of the primary eyewear;
FIGURE 16 is a front elevational view similar to Fig. 15, with the docking head completely expanded and ready for attachment to the clip of the auxiliary eyewear of Fig. 13;
FIGURE 17 is a partially exploded perspective view of yet another eyeglass attachment;
FIGURE 18 is a front perspective view similar to Fig. 17, with the auxiliary eyewear attached to the primary eyewear in an in-use position;
FIGURE 19 is a front perspective view similar to Fig. 18, with the auxiliary eyewear pivoted away from the lenses of the primary eyewear;
FIGURE 20 is a partially fragmented cross-sectional view taken generally along line 20-20 of Fig. 18, illustrating the magnetic attachment of the auxiliary eyewear and the primary eyewear in an in-use position;
FIGURE 21 is a partially fragmented and cross-sectional view taken generally along line 21-21 of Fig. 19, illustrating the auxiliary eyewear being pivoted away from the lenses of the primary eyewear by virtue of different magnetic attachment points; and
FIGURE 22 is a rear perspective view of a hinge member mounted on a bracket and a pair of auxiliary lenses;
FIGURE 23 is a rear perspective view of the auxiliary lenses attached to the hinge member assembly;
FIGURE 24 is a partially exploded front perspective view of the auxiliary eyewear of FIG. 23, and a primary eyewear having a hinge member associated therewith;
FIGURE 25 is a front perspective view of the auxiliary eyewear magnetically coupled to the primary eyewear by means of the hinge members;
FIGURE 26 is a front perspective view, illustrating the auxiliary eyewear pivoted upwardly and in a non-use position;
FIGURE 27 is a cross-sectional view taken generally along line 27-27 of FIG. 25, illustrating the magnetic coupling of first and second hinge members, in accordance with the present invention;
FIGURE 28 is a cross-sectional view taken generally along line 28-28 of FIG. 26, illustrating the segmented movement of the auxiliary eyewear from a use position to a non-use position;
FIGURE 29 is a partially exploded front perspective view of an auxiliary eyewear and a primary eyewear, each having magnetic hinge members;
FIGURE 30 is a front perspective view illustrating the auxiliary eyewear coupled to the primary eyewear by means of the hinge members;
FIGURE 31 is a front perspective view illustrating the auxiliary eyewear pivoted upwardly into a non-use position in accordance with the present invention;
FIGURE 32 is a partially exploded front perspective view of an auxiliary eyewear having a hinge member, a cross-bar having another hinge member and saddles for removable attachment to a frame of a primary eyewear;
FIGURE 33 is a front perspective view, illustrating the auxiliary eyewear magnetically coupled to the hinge member of the cross-bar attached to the primary eyewear, and in an in-use position;
FIGURE 34 is a front perspective view similar to FIG. 33, illustrating the auxiliary eyewear pivoted upwardly to a non-use position;
FIGURE 35 is a perspective view of a cross-bar having a hinge member and articulating saddles, in accordance with the present invention;
FIGURE 36 is a partially exploded front perspective of an auxiliary eyewear having a hinge member, a cross-bar having another hinge member and articulated saddles, and a primary eyewear;
FIGURE 37 is a perspective view of the attached primary eyewear, cross-bar, and auxiliary eyewear;
FIGURE 38 is a partially exploded perspective view of a primary eyewear having an extension bearing multiple hinge members, and a first auxiliary eyewear and a second auxiliary eyewear, in phantom, exploded therefrom;
FIGURE 39 is a front perspective view of a plurality of auxiliary eyewear detachably and rotatably connected to the primary eyewear by means of magnetic hinges in accordance with the present invention; and
FIGURE 40 is a cross-sectional view taken generally along line 40-40, illustrating the magnetic coupling of the hinge members of the primary eyewear and the multiple auxiliary eyewear.

### DETAILED DESCRIPTION OF THE PREFERRED EMBODIMENTS

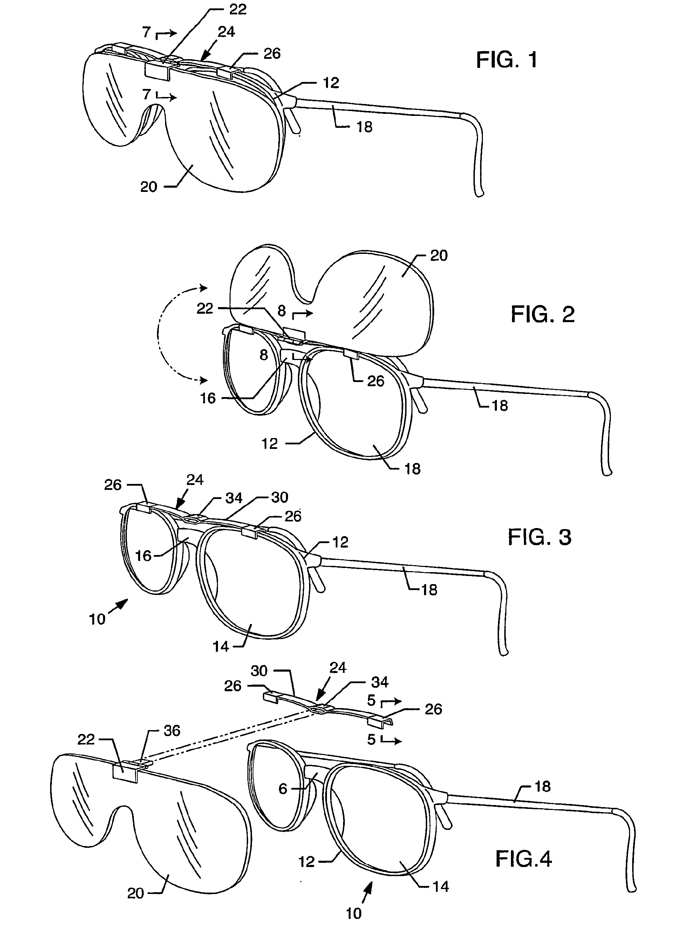

As illustrated in FIGS. 1-21 for purposes of illustration, not part of the present invention, a universal eyeglass attachment for attaching an auxiliary eyewear or lens to a frame of primary eyeglasses.

With reference to FIGS. 1 and 2, a universal eyeglass attachment is illustrated attached to a pair of primary eyewear 10, typically eyeglasses having a frame 12 which supports one or more lenses 14, and which includes a nose bridge portion 16, and elongated ear attachments 18. The universal eyeglass attachment includes an auxiliary lens 20, having a clip 22 which is removably mounted to a docking head 24 attached to the frame 12 of the eyeglasses 10. Although the auxiliary lense 20 is illustrated as a single lense, such as a sun shield, it should be understood that the auxiliary lense 20 can be of different configurations and uses. For example, the auxiliary lense 20 can comprise a protective shield or eyewear. The auxiliary lense 20 can also comprise one or more lenses within a frame, similar to the primary eyewear 10. The selection of the auxiliary lense 20 will depend upon the need of the user.

As illustrated in FIGS. 1 and 2, preferably the clip 22 is pivotally attached to the auxiliary eyewear 20 such that the eyewear or lense 20 can be moved between an in-use position wherein the lense 20 is generally aligned with the one or more lenses 14 of the primary eyewear 10, or pivoted upwardly so as to be out of alignment with the lenses 14 of the primary eyewear 10 and in a non-use position.

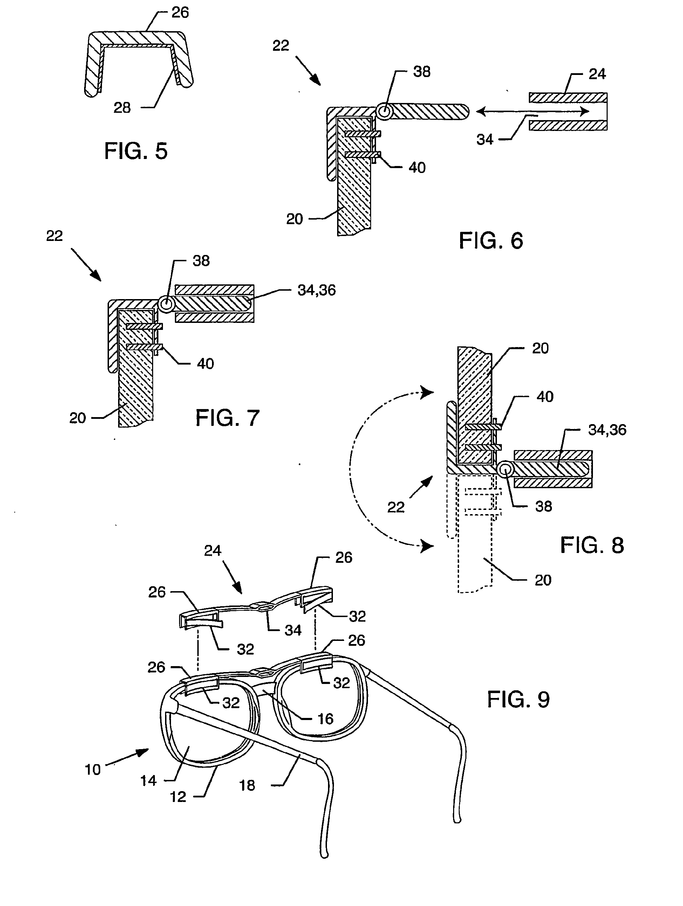

With reference now to FIGS. 3-5, the docking head 24 includes a pair of saddles 26 which are configured to be removably attached to the frame 12 of the primary eyewear, in particular, the saddles 26 are configured to be attached to an upper portion of the frame 12 which encircles the lenses 14. As shown in FIG. 5, preferably the saddles 26 are of a U-shaped configuration having a cushion grip material 28 lining the inner-surface thereof to protect the frame 12 of the eyewear 10 from being damaged as well as providing a compressible material to accommodate frames 12 of different thicknesses. As shown in FIG. 9, the saddles 26 may include swing-arms 32 which can be used to accommodate frames 12 of different thicknesses and serve to tighten and lock the saddles 26 onto the eyeglass frame 12. The swing-arms 32 are unlatched when the saddles 26 are placed onto the primary eyewear 10 and then pivoted closed against the frame 12 to securely lock the docking head 24 in place. The reverse steps are taken to remove the docking head 24.

Typically, the saddles 26 are interconnected with a cross-beam 30. This cross-beam 30 includes means for removably attaching the clip 22. Such means in the example illustrated in FIGS. 1-9 comprises a slot 34 formed in the cross-beam and which is configured to receive a tongue 36 extending from clip 32.

With references now to FIGS. 6-8, cross-sectional views are shown illustrating the frictional engagement of the tongue 36 of clip 32 with the slot 34 of docking head 24. The docking head 24 may include catches, releasable catches or the like so as to lock the tongue 36 therein, although not illustrated. The important aspect is that the clip 22 can be removably attached to the docking head 24, thus removably attaching the auxiliary eyewear 20 to the primary eyewear 10. As illustrated, the clip 22 includes a hinged portion 38 to allow pivotal movement between the tongue 36 and the portion of the clip 22 attached to the auxiliary lense for eyewear 20. Clip 22 can be attached to auxiliary eyewear 20 by any known means, including the illustrated pins 40, or by adhesive, welding or otherwise. The incorporation of hinge 38 enables the auxiliary eyewear lense to be pivotally in front of the lenses 14 of the primary eyewear 10, and away from the lenses 14, as illustrated and described above.

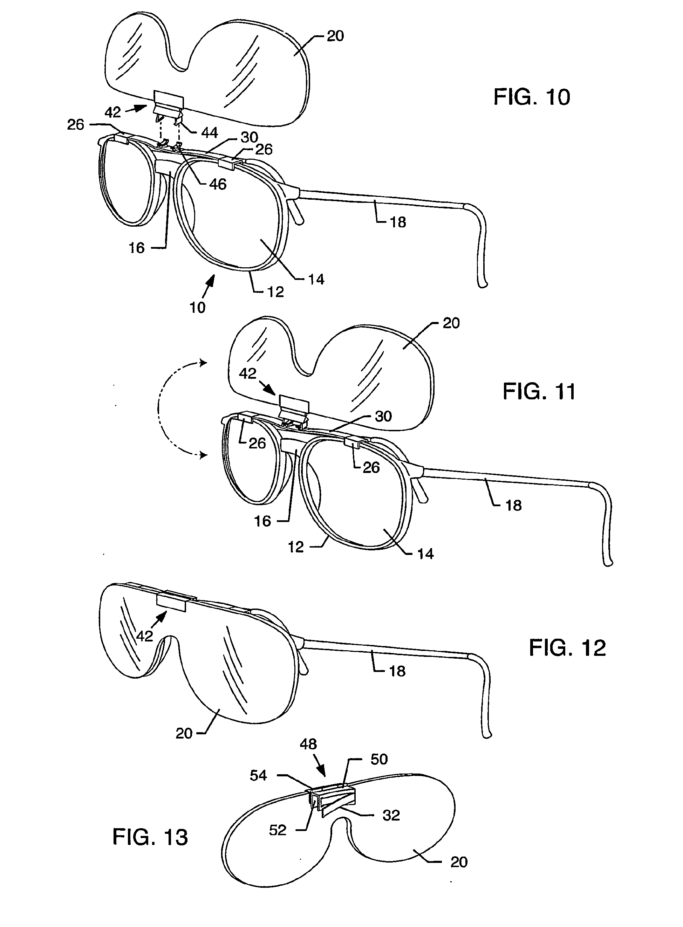

With reference now to FIGS. 10-12, another example not past of the present invention is illustrated wherein clip 42, which is also pivotally attached to auxiliary eyewear 20 includes protrusion 44 which frictionally engage with protrusion 46 of the docking head 24. Such protrusion 44 or 46 may form a snap-fit connection or the like. Once engaged, the auxiliary lense can be pivotally moved as described above and illustrated in FIGS. 11 and 12. Thus, it will be appreciated by those skilled in the art that different mechanisms and design may be implemented for removably attaching the auxiliary eyewear and primary eyewear 10 using a clip and docking head in accordance with a broad concept illustrated and described above.

With reference now to FIGS. 13-16, yet another example is illustrated. The auxiliary lense or eyewear 20 has a clip 48 attached thereto which includes a portion fixed to the auxiliary eyewear 20 and a body 50 defining any open-ended elongated slot 52 which is pivotally attached to the clip 48 with hinge 54. As will be more fully described herein, the body 50 may include a swing-arm 32 for locking the body 50 to a docking head 56.

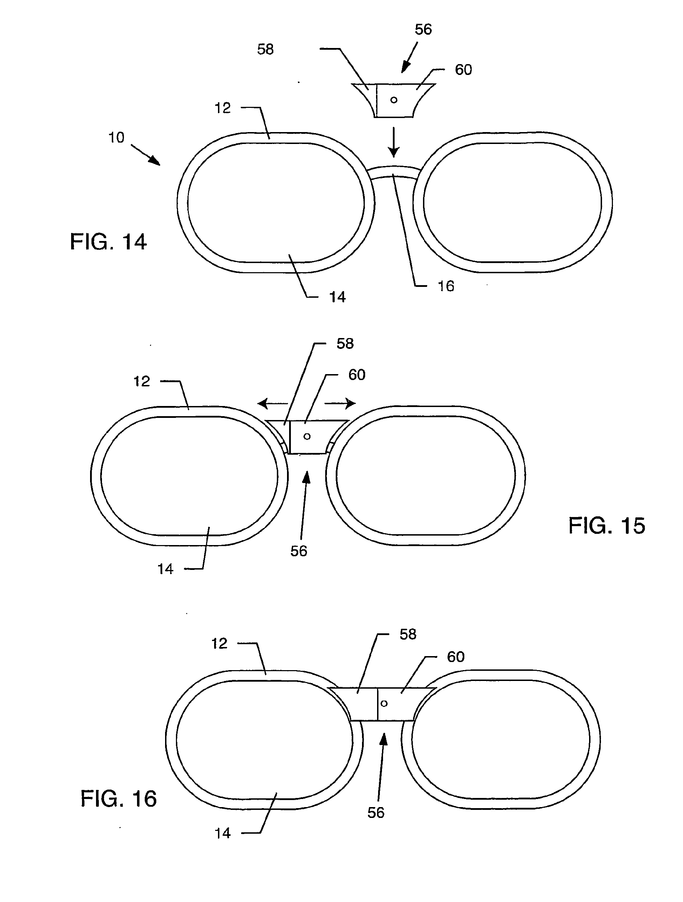

With particular reference now to FIGS. 14-16, the docking head 56 is comprised of two members 58 and 60 which are slidably interconnected with one another. These slidable members 58 and 60 include an open-face recess or slot for receiving the nose bridge 16 portion of the primary eyewear frame 12. Members 58 and 60 are biased outwardly, or in an expanded position, such that when compressed and placed on the nose bridge portion 16, they naturally expand outward and towards the lense-supporting portion of frame 12. Such biasing means can comprise a compression spring associated with the slidable members 58 and 60. Once the docking head 56 is secured to the nose bridge portion 16, the body 50 is attached thereto by inserting slot 52 over the docking head 56. The swing-arm 32 may then be used to secure the clip 48, and auxiliary eyewear 20, to the docking head 56. The auxiliary eyewear 20 can then be pivoted upward and downward, as described above.

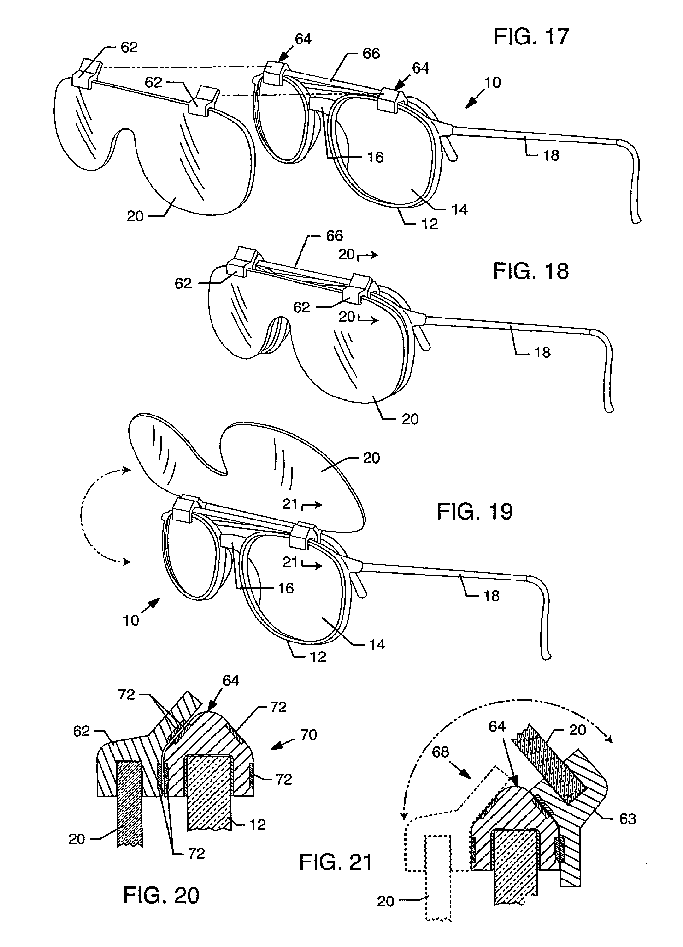

With reference now to FIGS. 17-21, yet another example is illustrated wherein couplings 62 attached to the auxiliary eyewear 20 are magnetically attached to the saddles 64. To ensure proper spacing, a cross-bar 66 typically interconnects the saddles 64. The saddles 64 include a front facet 68 and a rear facet 70. Each facet includes angularly offset faces having a magnet 72 imbedded therein or otherwise having magnetic properties. The coupling 62 is configured to essentially mate with the angled faces. Preferably, the coupling 62 also include a pair of magnets 72 which are magnetically attracted to the magnets 72 of the front and rear facets 68 and 70 of the saddles 64.

As shown in FIGS. 20 and 21, where the auxiliary eyewear 20 is desired to be in front of the lenses 14, the coupling 52 is magnetically attached to the front facet 68 of the saddles 64. The magnetic attraction between the coupling 62 and saddle 64 is such so as to hold the auxiliary eyewear 20 in place relative to the primary eyewear 10. The auxiliary eyewear or lense 20 can be moved out of alignment with the lenses 14 of the primary eyewear 10 by moving the coupling 62 from the front facet 68 to the rear facet 20, as illustrated in FIG. 21, such that the auxiliary eyewear lense 20 extends upwardly out of alignment with the lenses 14, yet not in contact with the forehead of the wearer of the eyeglasses 10. The angular offset of the faces of the front and rear facets 68 and 70 enable the auxiliary eyewear 20 to be positioned such. As the saddles 64 are removably attached to the frame 12 of the eyeglasses 10, they can be removed and inserted onto another pair of primary eyewear so that the auxiliary eyewear 20 can be attached to other eyewear as well.

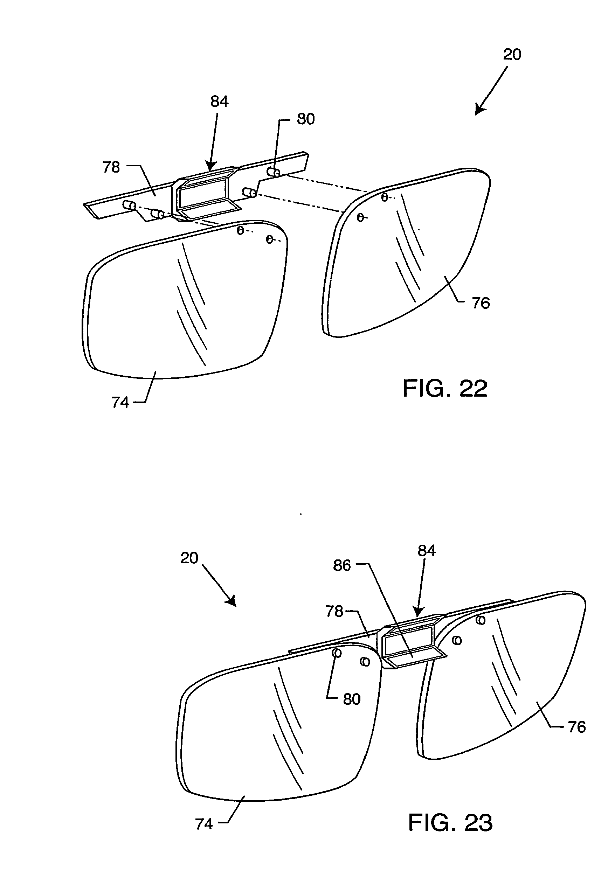

With reference now to FIGS. 22-28, in an embodiment, a pair of auxiliary lenses 74 and 76 are interconnected with one another using a bracket 78 having a plurality of pins 80 which are inserted through apertures 82 so as to be frictionally engaged therewith, bonded in place with adhesive or the like, etc. A hinge member 84 is associated with the bracket 78, such as by fixing or otherwise attaching the hinge 84 to the bracket 78. It will be appreciated that the hinge member 84 can be attached to the auxiliary eyewear 20 by other means, such as a clip, direct bonding to the eyewear 20, etc.

With reference to FIG. 23, the hinge member 84 has a plurality of generally planar inwardly-facing facets 86, in the embodiment illustrated a total of three which are angled from one another by 60°.

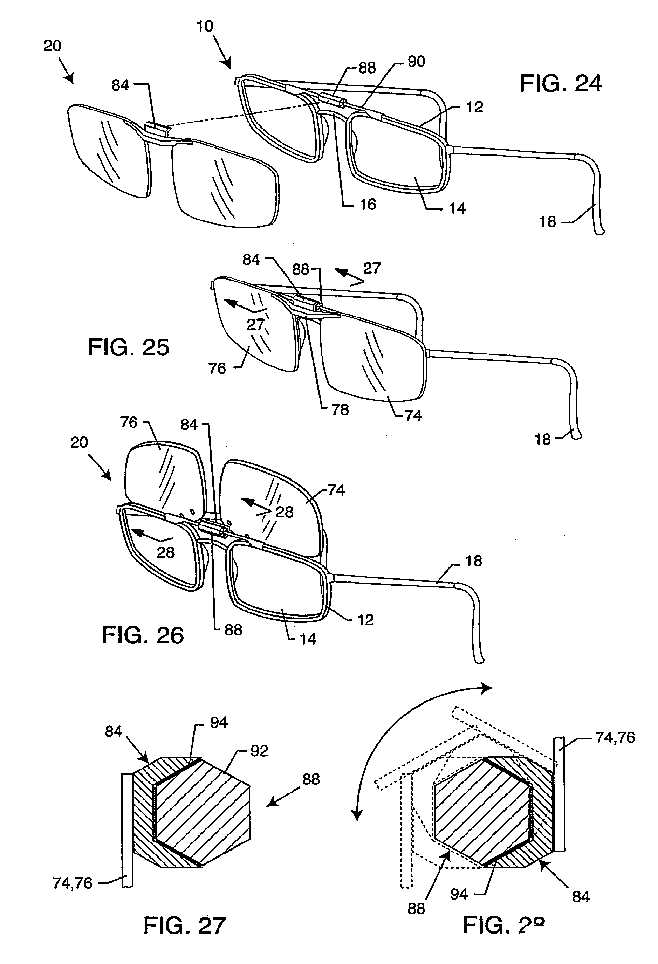

With reference now to FIG. 24, a primary eyewear, such as the illustrated eyeglasses 10 having a frame 12 and components 14-18 as discussed above, also has a hinge member 88 associated therewith. As illustrated in FIG. 24, the hinge member 88 is attached to a cross-beam 90 extending between frame members 12 of the two lenses 14 of the eyeglasses 10. The hinge member 88 is multi-faceted so as to have at least six generally planar outwardly-facing facets 92. In a particularly preferred embodiment, as illustrated, this hinge member 88 comprises a hexagon having six generally planar outwardly-facing facets. As illustrated in FIGS. 24 and 25, hinge members 84 and 88 compliment one another so as to be mated such that the inwardly facing facets 86 of the auxiliary hinge 84 are configured to overlie a plurality of the outwardly-facing facets 92 of the primary hinge 88, as illustrated in FIGS. 25-28.

The hinge members 84 and 88 are magnetically attracted to one another. That is, there is a magnetic field associated with at least some of the facets 86 or 92 such that the facets 86 and 92 are magnetically coupled to one another. This can be accomplished in a variety of ways. For example, the facets 86 or 92 could have magnets embedded therein, as described and discussed above in relation to FIGS. 18-21. That is, facets 86 or 92 could have magnets embedded therein which would attract and magnetically couple the opposite hinge member 84 or 88 which would be comprised of an appropriate material, such as an iron-based metal or the like. Magnets could be inserted in both of the facets 86 and 92 and disposed such that their opposite polarity faced outwardly so as to be attracted to one another. In yet another alternative, either the hinge member 84 or hinge member 88 would be comprised of a magnet or magnetized material such that it would magnetically attract and couple the opposite hinge member 84 or 88 thereto. However, in a particularly preferred embodiment, the facets 86 of hinge member 84 have a magnetic material or magnets 94 fixed on the planar facets 86 thereof. These magnets 94 create a magnetic field and attraction between the facets 86 and 92 of the hinge members 84 and 88 and couple the hinge members 84 and 88 to one another.

With reference now to FIGS. 26-28, due to the multi-faceted nature of the hinge members 84 and 88, and the fact that the number of inwardly-facing facets 86 of the auxiliary hinge member 84 is less than that of the outwardly-facing facets 92 of the primary hinge member 88, the hinge members 84 and 88 are capable of being selectively rotated in a segmented fashion. This is particularly illustrated in FIGS. 27 and 28 wherein the auxiliary hinge 84 coupled to the front three outwardly-facing facets 92 of hinge 88 can be moved in segmented fashion, in this case 60° with each segment, until a complete 180° of rotation is achieved, causing the auxiliary eyewear 20 to be pivoted upwardly and out of the field of vision of the primary eyewear 10. Of course, a complete 360° of rotation is also possible, in this case 60° with each segmented rotation. However, in the preferred implementation of this hinge system, the auxiliary eyewear 20 need only be rotated a total of 180° so as to be moved between an in-use position immediately in front of the eyeglass lenses 14 and a non-use position above the lenses 14 of the eyeglass 10.

It will be appreciated by those skilled in the art that the number of outwardly-facing facets 92 of the primary hinge 88 can be increased, for example, eight, ten, twelve, etc. Typically, the auxiliary hinge member 84 will have approximately half as many inwardly-facing facets 86 such that when the hinge members 84 and 88 are coupled to one another approximately 180° of the exterior surface of hinge member 88 is overlied by hinge member 84. This allows the auxiliary eyewear 20 to be placed at a pantoscopic angle with respect to the lenses 14 of the primary eyewear 10. Thus, if hinge member 88 were an octagon, hinge 84 would preferably include four generally planar inwardly-facing facets 86. In any event, there should be adequate magnetic coupling and contact between the hinge members 84 and 88 so that they are securely held with respect to one another yet capable of being rotated with respect to one another about the hinge axis of hinge member 88.

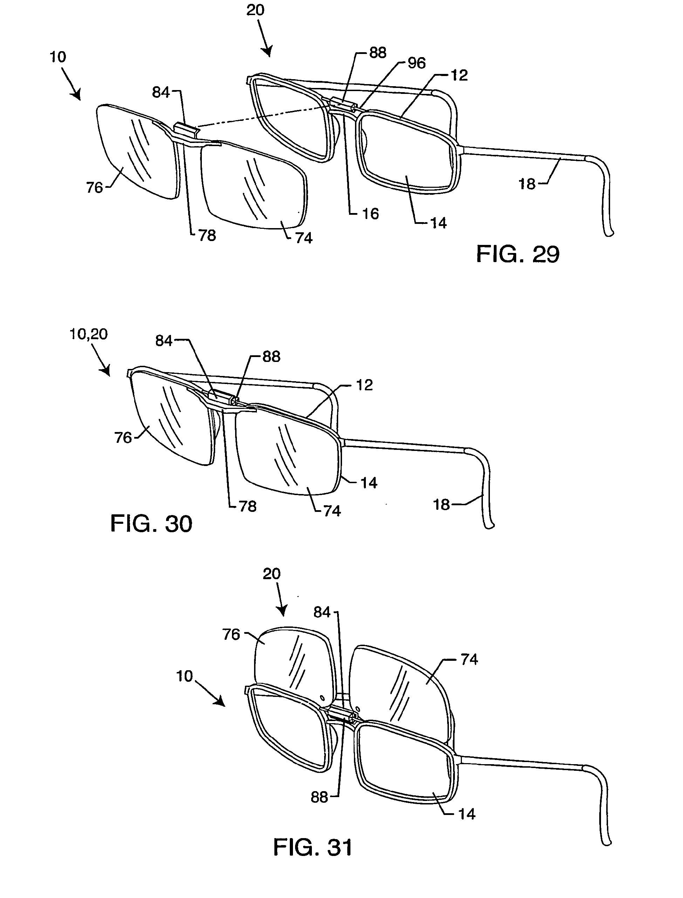

Many eyeglass frames 12 do not include a cross-beam 90. In the event that they do, hinge 88 can be coupled directly thereto. In the event that they do not, cross-beam 90 can be attached to the frame 12, such as by bonding with adhesive, spot welding or any other adequate means. Cross-beam 90 and hinge member 88 could be constructed integrally with one another. With reference to FIGS. 29-31, eyeglass frame 12 can be constructed so as to include a cross-beam 96 extending above the nose bridge 16 and between the lenses 14 and have hinge member 88 attached thereto or formed integrally therewith. In this manner, the appropriate lense 14 could be inserted into the frame 12 of the eyewear and the auxiliary eyewear 20 removably and rotatably coupled thereto due to the magnetic coupling and connection between hinge members 84 and 88, as described above.

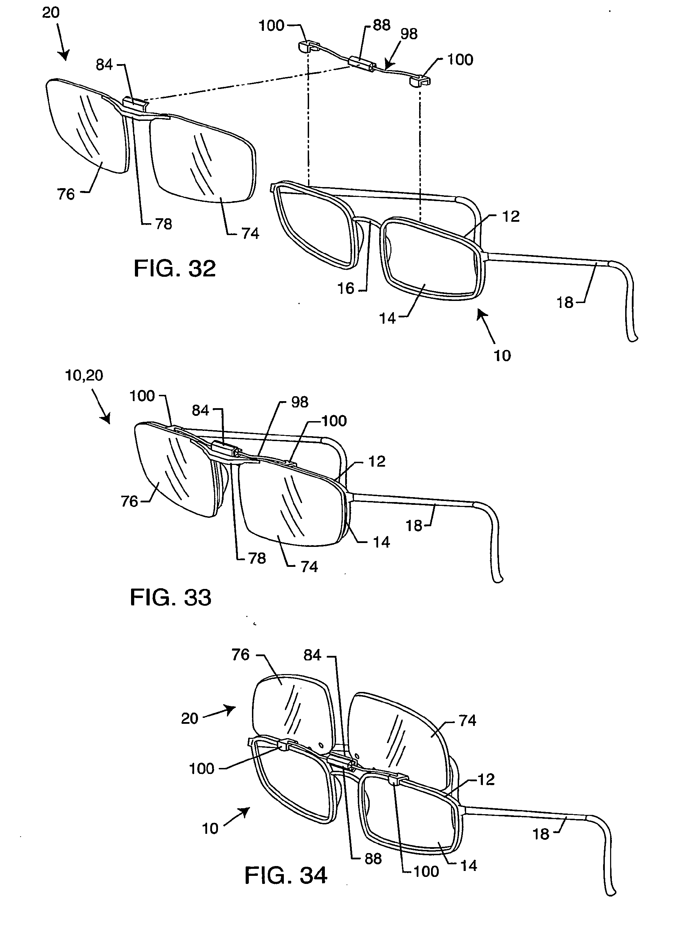

With reference now to FIGS. 32-34, a pair of eyeglasses 10 is illustrated having a frame 12 with no cross-bar. Many eyeglasses have this configuration and must be retrofit to accommodate the present invention. To accommodate existing eyewear 10, a removable cross-bar 98 is provided. The removable cross-bar 98 includes a hinge member 88, as described above, attached thereto or more typically integrally formed therewith. Saddles 100 are attached to or formed at the ends of the cross-bar 98 and adapted to be frictionally fit over portions of the eyeglass frame 12, as described above. As such, the saddles 100 are inverted U-shaped structures defining an open channel having a dimension sufficient to receive upper portions of the frame 12 on either side of the nose bridge 16 encircling a top portion of the lens 14, or in some cases the lens itself. Preferably, the saddles 100 include an elastomeric or the like material therein which serves to cushion against scratching and which can also serve to enhance the gripping between the saddle 100 and the frame 12. The interaction between hinges 84 of the auxiliary eyewear 20 and the hinge 88 of the cross-bar 98, attached to the primary eyewear 10, operates as discussed above.

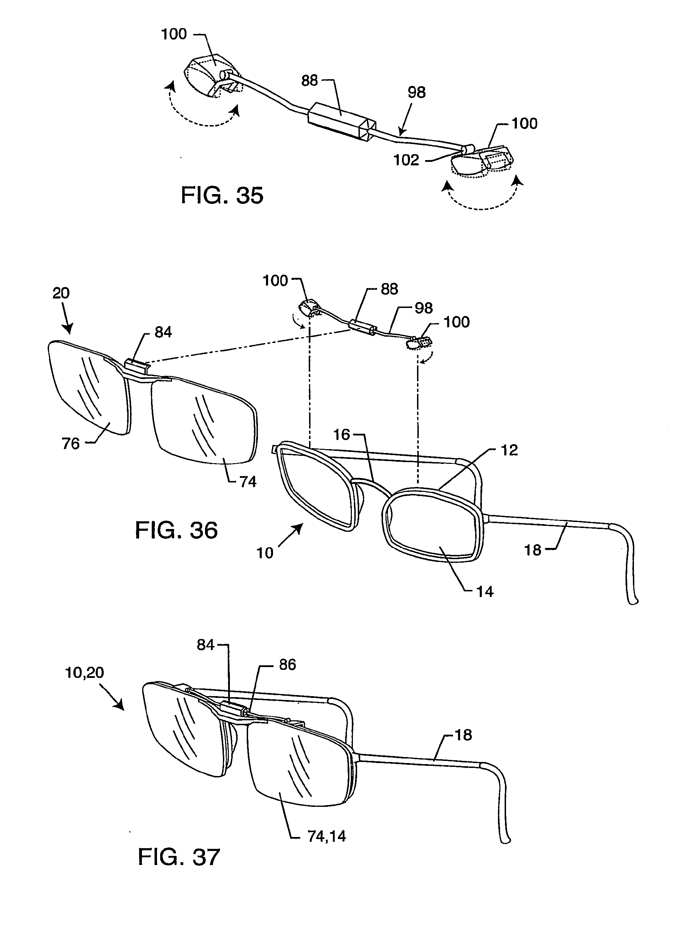

With reference now to FIGS. 35-37, in a particularly preferred embodiment, the saddles 100 are pivotally connected to the cross-bar 98, such as with a hinge 102 or other articulating structure. This enables the cross-bar 98 to be fitted to eyeglass frames of a different configuration, which may be more oval, circular, square, etc. depending upon the design of the eyeglasses 10. However, the distance between the lenses 14 is more or less consistent for an adult as the lenses 14 must be placed immediately in front of the user's eyes. The articulating or pivoting nature of the saddles 100 enables slight differences in distance or more particularly differences in shape of the frame 12 between the nose bridge 16 while using the same cross-beam 98.

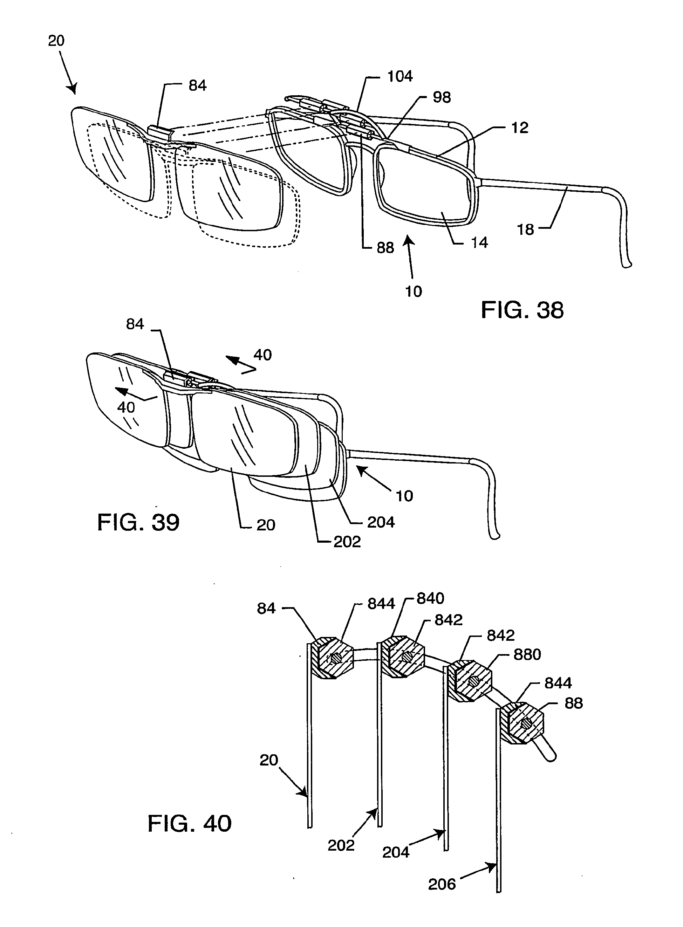

With reference now to FIGS. 38-40, yet another embodiment is illustrated which is particularly adapted for use by jewelers, surgeons, etc. where it might be desirable to have a plurality of auxiliary eyewear 20, 202, 204, etc. For example, in the case of a surgeon, in a given moment the surgeon may need a particular magnification and at another moment may need to increase or decrease that magnification. The present invention fulfills this need by providing an extension bar 104 which extends from the cross-beam 90, 96 or 98 and which supports a plurality of hinge members 88, 880-884 thereon. As illustrated in FIGS. 38-40, the extension 104 may comprise angled or curved bars having rungs extending therebetween each supporting a hinge member 88, 880-884. Due to the angle and spacing of the hinge members 88, 880-884, multiple auxiliary eyewear 20, 202-206, can be removably associated with the primary eyewear 10. As illustrated in FIG. 40, the hinge member 84 of the auxiliary eyewear 20 would be coupled with a primary hinge member 88, as described and illustrated above. A second or even additional auxiliary eyewear 202-206 could be coupled to hinge members 880-884 in a similar manner as each has their own hinge member 840-844. The secondary eyewear 20, 202-206 would not only be detachably connected to the primary eyewear 10, but also capable of being segmentedly rotated out of view of the lens 14 of the primary eyewear 10 so as to increase or decrease magnification. Other uses are feasible as well, such as increased shading or opaqueness of the lenses of the auxiliary eyewear 20 for purposes of welding or the like.

Thus, those skilled in the art will appreciate the present invention provides a universal eyeglass attachment for a pre-existing pair of eyeglasses or other primary eyewear without having to alter the eyeglasses 10 in any manner. Additionally, the universal eyeglass attachment of the present invention enables auxiliary eyewear 20, such as sunshades, to be easily attached and removed from the primary eyewear 10. Moreover, due to the pivotal connection of the clip and auxiliary eyewear 20, the auxiliary eyewear 20 can be pivoted out of alignment with the lenses of the primary eye wearer so as not to be in the line of sight. Such movement allows not only sun shades to be moved in front of and away from eyeglasses to accommodate, for example, the entering into a dark room, but also other uses. For example, the auxiliary eyewear 20 may comprise a prescription pair of lenses, which in conjunction with the lenses 14 of the primary eyewear 10 serve as bifocals or the like. The auxiliary eyewear lense or lenses 20 can be magnifying lenses for use of surgeons, dentists, jewelers, etc. Thus, the universal eyeglass attachment of the present invention can be used in a variety of settings and for a variety of different uses.

It will be appreciated that the magnetic hinge system, wherein hinge members 84 and 88 are magnetically coupled and selectively rotatable with respect to one another as described above, could be used not only in the preferred embodiments illustrated and described above, but also in uses other than eyewear. Indeed, it will be appreciated by those skilled in the art, that the magnetic hinge system could be advantageously incorporated whenever two objects must be detachably and rotatably coupled to one another. Thus, the invention should not necessarily be restricted to the universal eye attachment embodiments illustrated and discussed above.

Although several embodiments have been described in detail for purposes of illustration, various modifications may be made without departing from the scope of the invention. Accordingly, the invention is not to be limited, except as by the appended claims.

## Claims

1. A magnetic hinge system for rotatably coupling a first object (10) to a second object (20),whereby the first object (10) comprises a primary eyewear, and the second object (20) comprises an auxiliary eyewear detachably and rotatably connected to the primary eyewear, comprising:
a first hinge member (88) associated with the first object (10) and defining a hinge axis, the first hinge member (88) having at least six generally planar outwardly-facing facets (92) disposed about the hinge axis;
a second hinge member (84) associated with the second object (20) and having a plurality of generally planar inwardly-facing facets (86) configured to overlie less than all of the outwardly-facing facets;
**characterized by**
a magnetic field associated with at least some of the facets (92, 86) to couple the second hinge member (84) to the first hinge member (88) and permit selective segmented rotation of the second hinge member (84) relative to the first hinge member (88) about the hinge axis.

2. The system of claim 1, wherein the second hinge member (84) includes at least half as many facets (86) as the first hinge member (88).

3. The system of claim 2, wherein approximately 180 degrees of the exterior surface of the first hinge member (88) is overlied by the second hinge member (84).

4. The system of claim 3, wherein the first hinge member (88) comprises a hexagon and the second hinge member (84) includes three facets (86) overlying three outwardly-facing facets (92) of the hexagon simultaneously.

5. The system of claim 1, wherein at least a plurality of the facets (92) of the first hinge member (88) have magnets embedded therein for magnetic coupling with the facets (86) of the second hinge member (84).

6. The system of claim 1, wherein at least a plurality of the facets (86)of the second hinge member (84) have magnets embedded therein for magnetic coupling with the facets (92) of the first hinge member (88).

7. The system of claim 1, wherein at least a plurality of the facets (86, 92) of the first (88) and second (84) hinge members have magnets embedded therein such that the magnets of the first (88) and second (84) hinge members couple with one another as the facets (86, 92) thereof are placed into contact with one another.

8. The system of claim 1, wherein the first hinge member (88) is magnetic.

9. The system of claim 1, wherein the second hinge member (84) is magnetic.

10. The system of claim 1, wherein the first object (10) comprises a cross-bar (90; 98) having saddles (100) configured to be removably attached to a primary eyewear (10).

11. The system of claim 10, wherein the saddles are frictionally engageable with the primary eyewear (10).

12. The system of claim 10, including a gripping material disposed on an inner surface of the saddles (100) for frictionally engaging the frame of the primary eyewear(10).

13. The system of claim 12, wherein the saddles (100) are pivotally attached to the cross-bar (90; 98).

14. The system of claim 13, wherein the cross-bar (90; 98) includes an extension supporting a plurality of first hinges (88) spaced apart from one another such that a plurality of auxiliary eyewear (20) can be pivotally mounted to the primary eyewear (10).

15. The system of claim 1, wherein
the first object (10) comprises a primary eyewear, and the second object (20) comprises an auxiliary eyewear;
the system is designed for rotatably and removably coupling the auxiliary eyewear (20) to the primary eyewear (10),
the system comprises a cross-bar (90; 96; 98) connected to a frame (12) of the primary eyewear (10);
a the first hinge member (88) is associated with the cross-bar (90; 96; 98); and
the second hinge member (84) is associated with the auxiliary eyewear (20).

16. The system of claim 15, wherein the second hinge member (84) includes at least half as many facets (86) as the first hinge member (88) so as to overlie approximately 180 degrees of the exterior surface of the first hinge member (88).

17. The system of claim 15, wherein the first hinge member (88) comprises a hexagon and the second hinge member (84) includes three facets (86) simultaneously overlying three outwardly-facing facets (92) of the hexagon.

18. The system of claim 15, wherein the first hinge member (88) is magnetic.

19. The system of claim 18, wherein at least a plurality of the facets (92) of the first hinge member (88) have magnets embedded therein for magnetic coupling with the facets (86) of the second hinge member (84).

20. The system of claim 15, wherein the second hinge member (84) is magnetic.

21. The system of claim 20, wherein at least a plurality of the facets (86) of the second hinge member (84) have magnets embedded therein for magnetic coupling with the facets (92) of the first hinge member.

22. The system of claim 15, including saddles (100) attached to the cross-bar (90; 98) for removably and frictionally attaching the cross-bar (90; 98) to the primary eyewear (10).

23. The system of claim 22, including a gripping material disposed on an inner surface of the saddles (100) for frictionally engaging the frame (12) of the primary eyewear (10).

24. The system of claim 22, wherein the saddles (100) are pivotally attached to the cross-bar (90; 98).

25. The system of claim 15, wherein the cross-bar (90; 96; 98) includes an extension supporting a plurality of first hinges (88) spaced apart from one another such that a plurality of auxiliary eyewear (20) can be pivotally mounted to the primary eyewear (10).

## Patentansprüche

1. Magnetisches Schwenksystem für das schwenkbare Anbringen eines ersten Gegenstandes (10) an einem zweiten Gegenstand (20), wobei der erste Gegenstand (10) eine Hauptbrille umfasst und der zweite Gegenstand (20) eine Zusatzbrille umfasst, die abnehmbar und schwenkbar mit der Hauptbrille verbunden ist, umfassend:
ein erstes Schwenkelement (88), welches dem ersten Gegenstand (10) zugeordnet ist und eine Schwenkachse begrenzt, wobei das erste Schwenkelement (88) zumindest sechs im Allgemeinen planare nach außen gewandte Facetten (92) aufweist, die um die Schwenkachse angeordnet sind;
ein zweites Schwenkelement (84), welches dem zweiten Gegenstand (20) zugeordnet ist und eine Vielzahl von im Allgemeinen planaren nach innen gewandten Facetten (86) aufweist, so gestaltet, dass sie über weniger als allen der nach außen gewandten Facetten liegen;
**gekennzeichnet durch**
ein Magnetfeld, welches zumindest einigen der Facetten (92, 86) zugeordnet ist, um das zweite Schwenkelement (84) mit dem ersten Schwenkelement (88) zu verbinden und ein selektives segmentiertes Drehen des zweiten Schwenkelements (84) relativ zum ersten Schwenkelement (88) um die Schwenkachse zu gestatten.

2. System nach Anspruch 1, **dadurch gekennzeichnet, dass** das zweite Schwenkelement (84) zumindest halb so viele Facetten (86) wie das erste Schwenkelement (88) einschließt.

3. System nach Anspruch 2, **dadurch gekennzeichnet, dass** annähernd 180 Grad der äußeren Oberfläche des ersten Schwenkelements (88) durch das zweite Schwenkelement (84) bedeckt werden.

4. System nach Anspruch 3, **dadurch gekennzeichnet, dass** das erste Schwenkelement (88) ein Sechseck umfasst und das zweite Schwenkelement (84) drei Facetten (86) einschließt, welche gleichzeitig über drei nach außen gewandten Facetten (92) des Sechsecks liegen.

5. System nach Anspruch 1, **dadurch gekennzeichnet, dass** zumindest eine Vielzahl der Facetten (92) des ersten Schwenkelements (88) in diesen eingebettete Magneten für die magnetische Verbindung mit den Facetten (86) des zweiten Schwenkelements (84) aufweist.

6. System nach Anspruch 1, **dadurch gekennzeichnet, dass** zumindest eine Vielzahl der Facetten (86) des zweiten Schwenkelements (84) in diesen eingebettete Magneten für die magnetische Verbindung mit den Facetten (92) des ersten Schwenkelements (88) aufweist.

7. System nach Anspruch 1, **dadurch gekennzeichnet, dass** zumindest eine Vielzahl der Facetten (86, 92) des ersten Schwenkelements (88) und des zweiten Schwenkelements (84) in diesen eingebettete Magneten aufweisen, dergestalt dass die Magneten des ersten Schwenkelements (88) und des zweiten Schwenkelements (84) sich aneinander koppeln, wenn die Facetten (86, 92) derselben in Kontakt miteinander gebracht werden.

8. System nach Anspruch 1, **dadurch gekennzeichnet, dass** das erste Schwenkelement (88) magnetisch ist.

9. System nach Anspruch 1, **dadurch gekennzeichnet, dass** das zweite Schwenkelement (84) magnetisch ist.

10. System nach Anspruch 1, **dadurch gekennzeichnet, dass** der erste Gegenstand (10) eine Querstrebe (90; 98) umfasst, welche Sättel (100) aufweist, gestaltet dafür, abnehmbar an einer Hauptbrille (10) befestigt zu werden.

11. System nach Anspruch 10, **dadurch gekennzeichnet, dass** die Sättel reibschlüssig mit der Hauptbrille (10) sind.

12. System nach Anspruch 10, welches ein Greifinaterial einschließt, das auf einer inneren Oberfläche der Sättel (100) für den Reibschluss mit dem Rahmen der Hauptbrille (10) angeordnet ist.

13. System nach Anspruch 12, **dadurch gekennzeichnet, dass** die Sättel (100) schwenkbar an der Querstrebe (90; 98) befestigt sind.

14. System nach Anspruch 13, **dadurch gekennzeichnet, dass** die Querstrebe (90; 98) eine Verlängerung einschließt, die eine Vielzahl von ersten Schwenkelementen (88) trägt, die von einander so beabstandet sind, dass eine Vielzahl von Zusatzbrillen (20) schwenkbar an der Hauptbrille (10) befestigt werden kann.

15. System nach Anspruch 1, **dadurch gekennzeichnet, dass**
der erste Gegenstand (10) eine Hauptbrille umfasst und der zweite Gegenstand (20) eine Zusatzbrille umfasst;
das System ausgelegt ist für das schwenkbare und abnehmbare Verbinden der Zusatzbrille (20) mit der Hauptbrille (10); das System eine Querstrebe (90; 96; 98) umfasst, die mit einem Rahmen (12) der Hauptbrille (10) verbunden ist;
das erste Schwenkelement (88) der Querstrebe (90; 96; 98) zugeordnet ist; und
das zweite Schwenkelement (84) der Zusatzbrille (20) zugeordnet ist.

16. System nach Anspruch 15, **dadurch gekennzeichnet, dass** das zweite Schwenkelement (84) zumindest halb so viele Facetten (86) einschließt wie das erste Schwenkelement (88), um annähernd 180 Grad der äußeren Oberfläche des ersten Schwenkelements (88) zu bedecken.

17. System nach Anspruch 15, **dadurch gekennzeichnet, dass** das erste Schwenkelement (88) ein Sechseck umfasst und das zweite Schwenkelement (84) drei Facetten (86) einschließt, welche gleichzeitig über drei nach außen gewandten Facetten (92) des Sechsecks liegen.

18. System nach Anspruch 15, **dadurch gekennzeichnet, dass** das erste Schwenkelement (88) magnetisch ist.

19. System nach Anspruch 18, **dadurch gekennzeichnet, dass** zumindest eine Vielzahl der Facetten (92) des ersten Schwenkelements (88) in diesen eingebettete Magneten für die magnetische Verbindung mit den Facetten (86) des zweiten Schwenkelements (84) aufweist.

20. System nach Anspruch 15, **dadurch gekennzeichnet, dass** das zweite Schwenkelement (84) magnetisch ist.

21. System nach Anspruch 20, **dadurch gekennzeichnet, dass** zumindest eine Vielzahl der Facetten (86) des zweiten Schwenkelements (84) in diesen eingebettete Magneten für die magnetische Verbindung mit den Facetten (92) des ersten Schwenkelements aufweist.

22. System nach Anspruch 15, das Sättel (100) einschließt, die an der Querstrebe (90; 98) befestigt sind, um die Querstrebe (90; 98) abnehmbar und reibschlüssig mit der Hauptbrille (10) zu verbinden.

23. System nach Anspruch 22, welches ein Greifmaterial einschließt, das auf einer inneren Oberfläche der Sättel (100) für den Reibschluss mit dem Rahmen (12) der Hauptbrille (10) angeordnet ist.

24. System nach Anspruch 22, **dadurch gekennzeichnet, dass** die Sättel (100) schwenkbar an der Querstrebe (90; 98) befestigt sind.

25. System nach Anspruch 15, **dadurch gekennzeichnet, dass** die Querstrebe (90; 96; 98) eine Verlängerung einschließt, die eine Vielzahl von ersten Schwenkelementen (88) trägt, die von einander so beabstandet sind, dass eine Vielzahl von Zusatzbrillen (20) schwenkbar an der Hauptbrille (10) befestigt werden kann.

## Revendications

1. Système d'articulation magnétique pour accoupler en rotation un premier objet (10) à un second objet (20), le premier objet (10) comprenant des lunettes primaires, et le second objet (20) comprenant des lunettes auxiliaires raccordées de façon détachable et en rotation aux lunettes primaires, comprenant :
un premier élément d'articulation (88) associé au premier objet (10) et définissant un axe d'articulation, le premier élément d'articulation (88) ayant au moins six facettes (92) généralement planes dirigées vers l'extérieur disposées autour de l'axe d'articulation ;
un second élément d'articulation (84) associé au second objet (20) et ayant une pluralité de facettes (86) généralement planes dirigées vers l'intérieur configurées pour recouvrir moins de la totalité des facettes dirigées vers l'extérieur ;
**caractérisé par**
un champ magnétique associé à au moins certaines des facettes (92, 86) pour accoupler le second élément d'articulation (84) au premier élément d'articulation (88) et permettre une rotation segmentée sélective du second élément d'articulation (84) par rapport au premier élément d'articulation (88) autour de l'axe d'articulation.

2. Système selon la revendication 1, dans lequel le second élément d'articulation (84) inclut au moins moitié autant de facettes (86) que le premier élément d'articulation (88).

3. Système selon la revendication 2, dans lequel environ 180 degrés de la surface extérieure du premier élément d'articulation (88) sont recouverts par le second élément d'articulation (84).

4. Système selon la revendication 3, dans lequel le premier élément d'articulation (88) comprend un hexagone, et le second élément d'articulation (84) inclut trois facettes (86) recouvrant simultanément trois facettes (92) de l'hexagone dirigées vers l'extérieur.

5. Système selon la revendication 1, dans lequel au moins une pluralité des facettes (92) du premier élément d'articulation (88) ont des aimants qui y sont noyés pour un accouplement magnétique avec les facettes (86) du second élément d'articulation (84).

6. Système selon la revendication 1, dans lequel au moins une pluralité des facettes (86) du second élément d'articulation (84) ont des aimants qui y sont noyés pour un accouplement magnétique avec les facettes (92) du premier élément d'articulation (88).

7. Système selon la revendication 1, dans lequel au moins une pluralité des facettes (86, 92) des premier (88) et second (84) éléments d'articulation ont des aimants qui y sont noyés de sorte que les aimants des premier (88) et second (84) éléments d'articulation s'accouplent l'un à l'autre lorsque leurs facettes (86, 92) sont placées en contact les unes avec les autres.

8. Système selon la revendication 1, dans lequel le premier élément d'articulation (88) est magnétique.

9. Système selon la revendication 1, dans lequel le second élément d'articulation (84) est magnétique.

10. Système selon la revendication 1, dans lequel le premier objet (10) comprend une traverse (90 ; 98) ayant des sellettes (100) configurées pour être attachées de façon amovible à des lunettes primaires (10).

11. Système selon la revendication 10, dans lequel les sellettes peuvent être mises en prise par friction avec les lunettes primaires (10).

12. Système selon la revendication 10, comprenant un matériau d'agrippement disposé sur une surface intérieure des sellettes (100) pour mettre en prise par friction la monture des lunettes primaires (10).

13. Système selon la revendication 12, dans lequel les sellettes (100) sont attachées en pivotement à la traverse (90 ; 98).

14. Système selon la revendication 13, dans lequel la traverse (90 ; 98) comprend un prolongement supportant une pluralité de premières articulations (88) espacées les unes des autres de sorte qu'une pluralité de lunettes auxiliaires (20) peuvent être montées en pivotement sur les lunettes primaires (10).

15. Système selon la revendication 1, dans lequel
le premier objet (10) comprend des lunettes primaires, et le second objet (20) comprend des lunettes auxiliaires ;
le système est conçu pour accoupler, en rotation et de façon amovible, les lunettes auxiliaires (20) aux lunettes primaires (10),
le système comprend une traverse (90 ; 96 ; 98) raccordée à une monture (12) des lunettes primaires (10) ;
le premier élément d'articulation (88) est associé à la traverse (90 ; 96 ; 98) ; et
le second élément d'articulation (84) est associé aux lunettes auxiliaires (20).

16. Système selon la revendication 15, dans lequel le second élément d'articulation (84) inclut au moins moitié autant de facettes (86) que le premier élément d'articulation (88) de façon à recouvrir approximativement 180 degrés de la surface extérieure du premier élément d'articulation (88).

17. Système selon la revendication 15, dans lequel le premier élément d'articulation (88) comprend un hexagone, et le second élément d'articulation (84) comprend trois facettes (86) recouvrant simultanément trois facettes (92) de l'hexagone dirigées vers l'extérieur.

18. Système selon la revendication 15, dans lequel le premier élément d'articulation (88) est magnétique.

19. Système selon la revendication 18, dans lequel au moins une pluralité des facettes (92) du premier élément d'articulation (88) ont des aimants qui y sont noyés pour un accouplement magnétique avec les facettes (86) du second élément d'articulation (84).

20. Système selon la revendication 15, dans lequel le second élément d'articulation (84) est magnétique.

21. Système selon la revendication 20, dans lequel au moins une pluralité des facettes (86) du second élément d'articulation (84) ont des aimants qui y sont noyés pour un accouplement magnétique avec les facettes (92) du premier élément d'articulation.

22. Système selon la revendication 15, comprenant des sellettes (100) attachées à la traverse (90 ; 98) pour attacher, de façon amovible et par friction, la traverse (90 ; 98) aux lunettes primaires (10).

23. Système selon la revendication 22, incluant un matériau d'agrippement disposé sur une surface interne des sellettes (100) pour mettre en prise par friction la monture (12) des lunettes primaires (10).

24. Système selon la revendication 22, dans lequel les sellettes (100) sont attachées en pivotement à la traverse (90 ; 98).

25. Système selon la revendication 15, dans lequel la traverse (90 ; 96 ; 98) inclut un prolongement supportant une pluralité de premières articulations (88) espacées les unes des autres de sorte qu'une pluralité de lunettes auxiliaires (20) peuvent être montées en pivotement sur les lunettes primaires (10).
